# EUROPEAN PATENT SPECIFICATION

(11) **EP 1 761 436 B1**
(45) Date of publication and mention of the grant of the patent: **22.10.2008**
(21) Application number: 05700763.5
(22) Date of filing: 06.01.2005
(51) Int. Cl.: B65D 17/50, B29C 65/16

(54) **CONTAINER AND METHOD FOR PRODUCING SUCH A CONTAINER**
BEHÄLTER UND VERFAHREN ZUR HERSTELLUNG SOLCH EINES BEHÄLTERS
CONTENEUR ET PROCEDE DE MANUFACTURE DE CE CONTENEUR

(30) Priority: 29.01.2004 EP 04075284
(43) Date of publication of application: 14.03.2007
(73) Proprietor: Impress Group B.V., 7418 AH Deventer (NL)
(72) Inventor: JONGSMA, Jelmer, Eelke, 72200 La Flèche (FR); ISENSEE, Tili-Torsten, 26209 Kirchhatten (DE)
(74) Representative: Prins, Hendrik Willem
(86) International application number: PCT/EP2005/000114
(87) International publication number: WO 2005/075305

(56) References cited:
- EP-A- 0 483 569
- WO-A-02/42164
- US-A- 5 395 005
- US-A- 5 697 514
- US-B1- 6 427 862
- US-B2- 6 554 556

## Description

The invention relates to a container comprising a bottom, a peripheral wall extending from the edge of the bottom, a mouth opening defined by the upper part of the peripheral wall and a membrane lid arranged with an attachment zone on the edge of the mouth opening for closing the container.

Such containers are usually used for storing foodstuff and other products. The membrane lid is sealed onto the edge of the mouth opening. This sealing occurs with a heated tool which is pressed onto the lid, such that the lid and the mouth opening are heated at the attachment zone and the lid can fuse to the edge of the mouth opening. It is common to provide at least a metalized layer onto the side of the lid. Another possibility is to manufacture the lid from a metal membrane. The heated tool transfers the heat due to the good conductivity of the metal to the attachment zone, such that attachment of the lid to the container can be effected.

There is a tendency that consumers want to see what is stored inside the container. Therefore a container needs a window through which the content of the container can be seen. With metalized or metal membrane lids, this is not possible. In order to provide a window the membrane lid has to comprise an area consisting of a transparent plastic through which the content can be seen. However with the current sealing method, this is not possible. With one plastic, the plastic would stick to the heating tool, with a lid containing more than one layer the attachment is difficult because of bad conductivity of the heat, moreover the lid will often curl because of the different behavior of the different plastic layers.

From a manufacturers view point it is desired to have a manufacturing process in which batches of different sized containers can easily be filled and sealed with a membrane lid, without substantial down time of the machinery. When using the conventional manufacturing method the heated tools have to be exchanged in order to be able to fill and seal another kind of container. This means that an operator has to shut down the machines and physically remove the tools and exchange them with tools suitable for the new batch of containers.

EP-A-483 569 discloses a method and an apparatus for arranging a lid onto a container. The lid is made of a laser transparent plastic, while the container is of a second layer absorbing plastic. By controlling the laser, the lid is fused onto the container.

US-A-5 359 005 discloses a method for making a lid device for a wide-mouthed container. The container is provided with a foil lid arranged onto a mouth opening. The lid consists at the attachment zone over its' thickness of a plastic material.

US-A-5 697 154 discloses a container and a closure with an in turned seam. The closure has a central plastic layer and an outer rim of a second foil which is clamped and folded between the edge of the metal container.

It is the object of the invention to provide a container with which the above mentioned disadvantages are met.

This object is achieved by a container comprising a mouth opening and a membrane lid arranged with an attachment zone on the edge of the mouth opening for closing the container, the membrane lid consists at the attachment zone over its thickness of plastic, wherein a center zone surrounded by the attachment zone comprises a metal layer, wherein the bottom and peripheral wall are sheet metal, characterized in that the edge of the mouth opening comprises a plastic coating and the attachment zone of the membrane lid is fused to the edge of the mouth opening.

This enables attachment of the lid to the edge of the mouth opening by an energy beam, such as a laser beam or electron beam. With the current lid, comprising at least a metalized layer, this is not possible, as the metal would reflect the energy beam, such that the energy cannot reach the interface between the edge of the mouth opening and the membrane lid in order to attach the lid to the edge. As a container according to the invention enables the use of an energy beam, the manufacturing process becomes more flexible, as containers of different sizes and shapes can be handled without substantial down time, as only the device controlling the energy beam has to be reprogrammed. This even makes it possible to manufacture containers of all kinds of shapes, as reprogramming of the controlling device can be done at each individual container.

With a container according to the invention heated tools are not any longer necessary, such that the membrane lid can comprise a window through which a consumer can see the contents. This container may be made of metal, plastic and combinations thereof.

In the container according to the invention a center zone surrounded by the attachment zone comprises a metal layer. A metal layer arranged on the membrane lid provides a barrier for sunlight and counteracts the diffusion of compounds through the lid. This prolongs the storage live of the foodstuff contained in the container.

In the container according to the invention the bottom and peripheral wall are sheet metal. Specially with sheet metal containers the lid according to the invention has its advantages, as this provides a new and more flexible way of manufacturing containers with membrane lids.

In the container according to the invention the attachment zone of the membrane lid is fused to the edge of the mouth opening.

The edge of the mouth opening comprises a plastic. The plastic of the mouth opening will fuse to the plastic of the membrane lid providing an gas tight seal.

The edge of the mouth opening comprises a plastic coating. Such a plastic coating is preferred with sheet metal containers.

The invention also relates to a method for producing a container having a mouth opening defined by the upper part of the peripheral wall and a membrane lid arranged with an attachment zone on the edge of the mouth opening for closing the container, wherein the method comprises the steps of:
- providing a container with a bottom and a peripheral wall;
- providing a first plastic onto the edge of the mouth opening, defined by the peripheral wall, wherein the first plastic substantially absorbs the energy of a laser beam;
- providing a membrane lid having an attachment zone for attachment to the edge of the mouth opening, wherein the attachment zone of the membrane lid consists over its thickness of a second plastic, which is substantially transparent for the laser beam;
- arranging the membrane lid onto the edge of the mouth opening and guiding the laser beam along and through the attachment zone onto the first plastic, such that the energy of the laser beam is dissipated in the first plastic and the generated heat causes the first plastic and the second plastic to fuse.

As a laser beam can easily be programmed to irradiate any kind of contour this method according to the invention can easily be used for any kind of shape of container. In order to transfer the energy of the laser beam into heat the first plastic is chosen such that it absorbs the energy of the laser beam. This can be achieved by adding an absorbing pigment to the plastic. There are also other kinds of plastic materials available on the market which have laser beam absorbing properties.

In order to enable the laser beam to reach the interface between the edge of the mouth opening and the membrane lid, the membrane lid itself is made of a plastic transparent for the laser beam, at least at the attachment zone, such that the laser beam can go through the membrane lid and irradiate the first plastic, where the heat is generated in order to fuse the first plastic to the second plastic. The plastics are preferably thermoplasts.

The container can be a sheet metal container.

Another embodiment of the method according to the invention comprises the step of controlling the dissipation of the energy along the attachment zone. By controlling the dissipation of the energy along the attachment zone the generated heat is controlled, which makes it possible to adjust the strength of the seal of the lid to the edge of the mouth opening. In this way one can control the force necessary to tear the membrane lid from the mouth opening. It is thus possible to provide a lid, which can be opened with a constant tear force, despite the shape of the mouth opening. It is also possible to provide part of the attachment zone with an increased tear force, such that the consumer is almost forced to leave the membrane lid onto the container.

In a preferred embodiment of the method according to the invention the dissipation is controlled by controlling the contact time between the laser beam and the membrane lid. Having a laser beam with a substantial constant power, the dissipation of energy is controlled by controlling the contact time of the laser beam at a specific spot. As the contact time is increased, the dissipated energy is increased providing for a stronger bond between the membrane lid and the edge of the mouth opening.

In yet another embodiment of the method according to the invention the method comprises the step of guiding the laser beam along the contours of the attachment zone and controlling the travel speed of the laser beam in order to provide fusion areas of different dimensions and strength.

By controlling the travel speed of the laser beam, the contact time is also controlled providing therefore a control of the dissipation of the energy along the attachment zone.

Another possibility is to provide a first plastic onto the mouth opening having irregular properties along the attachment zone for absorbing the energy of a laser beam. In this way the laser beam can be guided along the attachment zone at a constant speed, while still fusion areas of different dimensions and strength are provided.

In another embodiment of the method according to the invention the dissipation is controlled by controlling the focus of the laser beam. When the energy of the laser beam is distributed over a varying spot size, the fusion areas along the attachment zone can be varied.

According to the method according to the invention the dissipation can also be controlled by setting the absorption properties of the first plastic. By varying the absorption properties along the attachment zone, for example by varying the absorbing pigment in the plastic, it is possible to create fusion areas of different dimensions by using a laser beam of constant energy.

It is also possible to control the dissipation by controlling the intensity characteristics of the laser beam. This can for example be done by filtering the laser beam for different parts along the attachment zone.

Another way to control the dissipation is by varying the transmission property of the membrane layers.

These and other advantages of the invention are elucidated in conjunction with the accompanying drawings.
Figure 1 shows a perspective view of a container according to the invention,
Figure 2 shows a cross sectional view of the upper part of the container according to figure 1,
Figure 3 shows an enlarged detail of the cross sectional view of figure 2,
Figure 4 shows a top view of the container according to figure 1, and
Figure 5 shows a cross sectional view of another container of the invention.

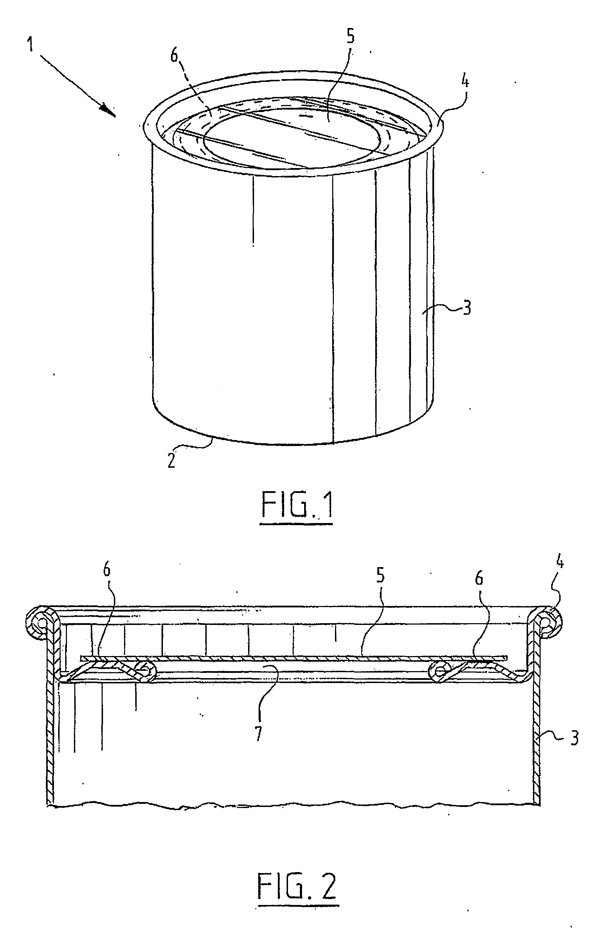

Figure 1 shows a container 1 according to the invention having a bottom 2 a peripheral upstanding wall 3. The upstanding wall 3 continues in a ring 4, which could be an integral part of the upstanding wall 3. The ring 4 defines a mouth opening onto which a membrane lid 5 is arranged. The membrane lid 5 is arranged with an attachment zone 6 to the edge of the ring 4.

Figure 2 shows a cross sectional view of figure 1. In this figure 2 the mouth opening 7, defined by the ring 4 is shown. The membrane lid 5 is arranged onto the edge of the ring 4 with an attachment zone 6.

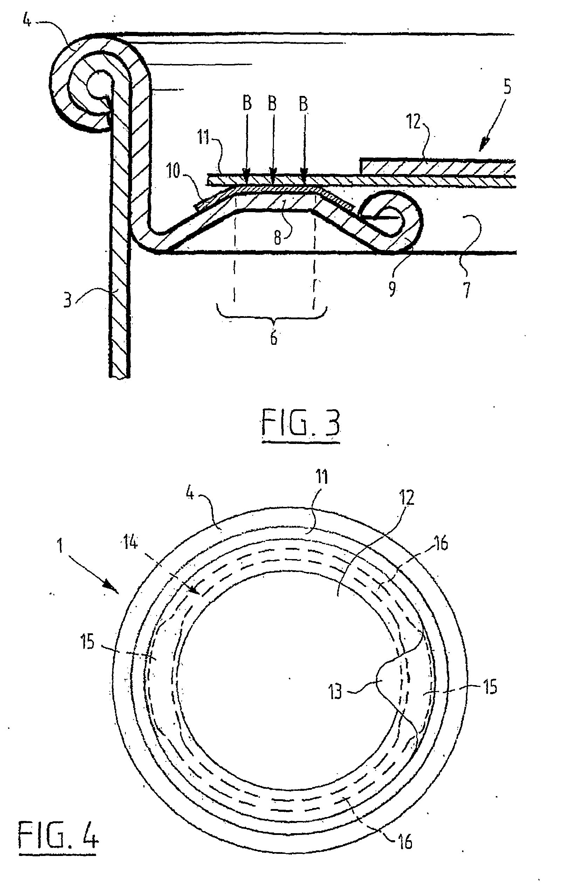

Figure 3 shows a detail of figure 2. The ring 4 has an elevated portion 8 and ends in a curl 9, which prevents sharp edges of the mouth opening 7. On the elevated part 8 a coating 10 of a first plastic is arranged. This first plastic absorbs the energy of a laser beam B and transfers the energy into heat. On top of the coating 10 the membrane lid 5 is arranged, which consists of a second plastic layer 11, which is transparent for the laser beam B and a metal layer 12, which blocks dissipation of compounds of the foodstuff and blocks sunlight.

When manufacturing the container 1 the coating 10 is applied to the ring 4 and a membrane lid 5 is arranged on top of.the mouth opening 7. Then a laser beam B is guided along the attachment zone 6. The energy of the laser beam B is absorbed by the first plastic 10 such that heat is generated and the plastic coating 10 fuses with the plastic layer 11 of the membrane lid 5.

Now looking to figure 4, a top view of the container 1 is shown. The membrane lid 5 is provided with a tab 13 to be able to tear off the membrane lid 5. With a dashed line the fusion area 14 is shown. By controlling for instance the velocity of the laser it is possible to provide larger fusion areas 15 and smaller fusion areas 16. In order to tear off the membrane lid from the larger fusion areas 15 a higher tear force is needed than the smaller fusion areas 16. This provides the possibility to adjust the tear force necessary to pull off the membrane lid 5 from the container 1. Any desired properties can be given.

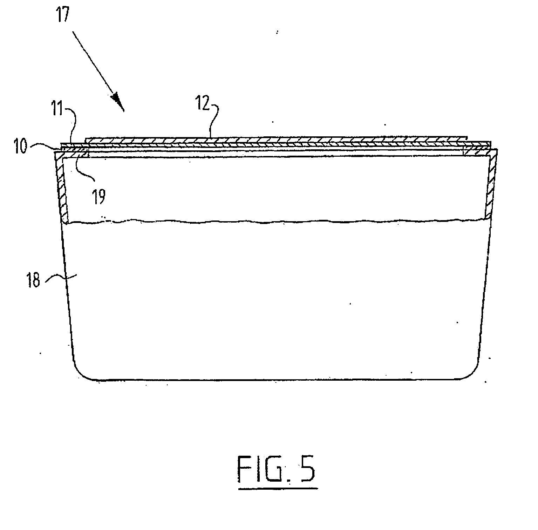

Figure 5 shows another plastic container 17 of the invention. It comprises a plastic bottom 18 with an integral ring 19. The ring 19 is provided with the laser energy absorbent plastic coating 10 onto which is present the second laser transparent plastic layer 11. This layer 11 carries the metal foil 12.

## Claims

1. Container (1, 17) comprising a mouth opening (7) and a membrane lid (5) arranged with an attachment zone (6) on the edge of the mouth opening (7) for closing the container (1, 17), the membrane lid (5) consist at the attachment zone (6) over its thickness of plastic (11), wherein a center zone surrounded by the attachment zone comprises a metal layer (12), wherein the bottom (2, 18) and peripheral wall (3) are sheet metal, **characterized in that** the edge of the mouth opening (7) comprises a plastic coating (10) and the attachment zone (6) of the membrane lid (5) is fused to the edge of the mouth opening (7).

2. Method for producing a sheet metal container (1, 17) having a mouth opening (7) defined by the upper part of the peripheral wall (3) and a membrane lid (5) arranged with an attachment zone (6) on the edge of the mouth opening (7) for closing the container (1, 17), wherein the method comprises the steps of:
- providing sheet metal container (1, 17) with a bottom 2 and a peripheral wall (3);
- providing a first plastic coating (10) onto the edge of the mouth opening (7), defined by the peripheral wall (3), wherein the first plastic (10) substantially absorbs the energy of a laser beam (B);
- providing a membrane lid (5) having an attachment zone for attachment to the edge of the mouth opening (7), wherein the attachment zone of the membran lid consists over its thickness of a second plastic (11), which is substantially transparent for the laser beam (B);
- arranging the membrane lid (5) onto edge of the mouth opening (7) and guiding the laser beam (B) along and through the attachment zone (6) onto the first plastic (10), such that the energy of the laser beam is dissipated in the first plastic (10) and the generated heat causes the first plastic (10) and the second plastics (11) to fuse.

3. Method according to claim 2, comprising the step of controlling the dissipation of the energy along the attachment zone (6).

4. Method according to claim 3, wherein the dissipation is controlled by controlling the contact time between the laser beam (B) and the membrane lid (5).

5. Method according to claim 3 or 4, comprising the step of guiding the laser beam (B) along the contours of the attachment zone (6) and controlling the travel speed of the laser beam (B) in order to provide fusion areas of different dimensions.

6. Method according to any claim 3-5, wherein the dissipation is controlled by controlling the focus of the laser beam (B).

7. Method according to any claim 3-6, wherein the dissipation is controlled by setting the absorption property of the first plastic (10).

8. Method according to any claim 3-7, wherein the dissipation is controlled by setting the transmission property of the membrane layers (10, 11).

9. Method according to any claim 3-8, wherein the dissipation is controlled by controlling the intensity characteristic of the laser beam (B).

## Patentansprüche

1. Behälter (1, 17) mit einer Mundöffnung (7) und einem Membrandeckel (5), der mit einer Befestigungszone (6) an dem Rand der Mundöffnung (7) angeordnet ist, zum Verschließen des Behälters (1, 17), wobei der Membrandeckel (5) an der Befestigungszone (6) über seine Dicke hinweg aus Kunststoff (11) besteht, wobei eine von der Befestigungszone umgebene, zentrale Zone eine Metallschicht (12) aufweist, wobei der Boden (2, 18) und die Umfangswand (3) Blech sind, **dadurch gekennzeichnet, dass** der Rand der Mundöffnung (7) eine Kunststoffbeschichtung (10) aufweist und die Befestigungszone (6) des Membrandeckels (5) mit dem Rand der Mundöffnung (7) verschmolzen ist.

2. Verfahren zum Herstellen eines Blechbehälters (1, 17), der eine von dem oberen Teil der Umfangswand (3) definierte Mundöffnung (7) und einen Membrandeckel (5) aufweist, der mit einer Befestigungszone (6) an dem Rand der Mundöffnung (7) angeordnet ist, zum Verschließen des Behälters (1, 17), wobei das Verfahren die Schritte aufweist:
- Bereitstellen eines Blechbehälters (1, 17) mit einem Boden (2) und einer Umfangswand (3),
- Bereitstellen einer ersten Kunststoffbeschichtung (10) auf dem Rand der von der Umfangswand (3) definierten Mundöffnung (7), wobei der erste Kunststoff (10) die Energie eines Laserstrahls (B) im Wesentlichen absorbiert,
- Bereitstellen eines Membrandeckels (5) mit einer Befestigungszone zum Befestigen an dem Rand der Mundöffnung (7), wobei die Befestigungszone des Membrandeckels über ihre Dicke hinweg aus einem zweiten Kunststoff (11) besteht, welcher für den Laserstrahl (B) im Wesentlichen durchlässig ist,
- Anordnen des Membrandeckels (5) auf dem Rand der Mundöffnung (7) und Führen des Laserstrahls (B) entlang der und durch die Befestigungszone (6) hindurch auf den ersten Kunststoff (10), so dass die Energie des Laserstrahls in den ersten Kunststoff (10) abgegeben wird und die erzeugte Wärme bewirkt, dass der erste Kunststoff (10) und der zweite Kunststoff (11) verschmelzen.

3. Verfahren gemäß Anspruch 2, aufweisend den Schritt eines Steuerns der Energieabgabe entlang der Befestigungszone (6).

4. Verfahren gemäß Anspruch 3, wobei die Abgabe gesteuert wird durch Steuern der Kontaktzeit zwischen dem Laserstrahl (B) und dem Membrandeckel (5).

5. Verfahren gemäß Anspruch 3 oder 4, aufweisend den Schritt eines Führens des Laserstrahls (B) entlang der Konturen der Befestigungszone (6) und eines Steuerns der Bewegungsgeschwindigkeit des Laserstrahls (B), so dass Verschmelzungsbereiche unterschiedliche Abmessungen bereitgestellt werden.

6. Verfahren gemäß einem Anspruch 3-5, wobei die Abgabe gesteuert wird durch Steuern des Fokus des Laserstrahls (B).

7. Verfahren gemäß einem Anspruch 3-6, wobei die Abgabe gesteuert wird durch Konfigurieren des Absorptionsvermögens des ersten Kunststoffs (10).

8. Verfahren gemäß einem Anspruch 3-7, wobei die Abgabe gesteuert wird durch Konfigurieren des Transmissionsvermögens der Membranschichten (10, 11).

9. Verfahren gemäß einem Anspruch 3-8, wobei die Abgabe gesteuert wird durch Steuern der Intensitätscharakteristik des Laserstrahls (B).

## Revendications

1. Récipient (1, 17) comprenant une ouverture d'embouchure (7) et un couvercle à membrane (5) agencé avec une zone de fixation (6) sur le bord de l'ouverture d'embouchure (7) pour fermer le récipient (1, 17), le couvercle à membrane (5) se compose de la zone de fixation (6) sur son épaisseur de plastique (11), dans lequel une zone centrale entourée par la zone de fixation comprend une couche métallique (12), dans lequel le fond (2, 18) et la paroi périphérique (3) sont en tôle, **caractérisé en ce que** le bord de l'ouverture d'embouchure (7) comprend un revêtement en plastique (10) et la zone de fixation (6) du couvercle à membrane (5) est fondue sur le bord de l'ouverture d'embouchure (7).

2. Procédé pour produire un récipient en tôle (1, 17) ayant une ouverture d'embouchure (7) définie par la partie supérieure de la paroi périphérique (3) et un couvercle à membrane (5) agencé avec une zone de fixation (6) sur le bord de l'ouverture d'embouchure (7) pour refermer le récipient (1, 17), dans lequel le procédé comprend les étapes consistant à :
prévoir un récipient en tôle (1, 17) avec un fond (2) et une paroi périphérique (3) ;
prévoir un premier revêtement en plastique (10) sur le bord de l'ouverture d'embouchure (7), définie par la paroi périphérique (3), dans lequel le premier plastique (10) absorbe sensiblement l'énergie d'un faisceau laser (B) ;
prévoir un couvercle à membrane (5) ayant une zone de fixation pour la fixation au bord de l'ouverture d'embouchure (7), dans lequel la zone de fixation du couvercle à membrane se compose sur son épaisseur d'un second plastique (11), qui est sensiblement transparent pour le faisceau laser (B) ;
agencer le couvercle à membrane (5) sur le bord de l'ouverture d'embouchure (7) et guider le faisceau laser (B) le long et à travers la zone de fixation (6) sur le premier plastique (10), de sorte que l'énergie du faisceau laser est dissipée dans le premier plastique (10) et la chaleur générée amène le premier plastique (10) et le second plastique (11) à fondre.

3. Procédé selon la revendication 2, comprenant l'étape consistant à contrôler la dissipation de l'énergie le long de la zone de fixation (6).

4. Procédé selon la revendication 3, dans lequel la dissipation est contrôlée en contrôlant le temps de contact entre le faisceau laser (B) et le couvercle à membrane (5).

5. Procédé selon la revendication 3 ou 4, comprenant l'étape consistant à guider le faisceau laser (B) le long des contours de la zone de fixation (6) et contrôler la vitesse de déplacement du faisceau laser (B) afin de fournir des zones de fusion de différentes dimensions.

6. Procédé selon l'une quelconque des revendications 3 à 5, dans lequel la dissipation est contrôlée en contrôlant le foyer du faisceau laser (B).

7. Procédé selon l'une quelconque des revendications 3 à 6, dans lequel la dissipation est contrôlée en réglant la propriété d'absorption du premier plastique (10).

8. Procédé selon l'une quelconque des revendications 3 à 7, dans lequel la dissipation est contrôlée en réglant la propriété de transmission des couches de membrane (10, 11).

9. Procédé selon l'une quelconque des revendications 3 à 8, dans lequel la dissipation est contrôlée en contrôlant la caractéristique d'intensité du faisceau laser (B).
